Europäisches Patentamt

European Patent Office

Office européen des brevets

(11) Publication number: **0 509 182 A1**

# EUROPEAN PATENT APPLICATION

(21) Application number: **91500079.8**

(22) Date of filing: **22.07.91**

(51) Int. Cl.5: **H04M 3/56**

(30) Priority: **18.04.91 ES 9100992**

(43) Date of publication of application:
**21.10.92 Bulletin 92/43**

(84) Designated Contracting States:
**DE FR GB IT**

(71) Applicant: **APLICACIONES ELECTRONICAS OUASAR, S.A.**
**Calle Rey Pastor 36, Poligono Industrial Leganes**
**Leganes (Madrid)(ES)**

(72) Inventor: **de la Fuente de la Fuente, Rogelio**
**Rey Pastor, 36, Poligono Industrial Leganes**
**Leganes, Madrid(ES)**

(74) Representative: **Alonso Langle, Emilio**
**Naciones, 12, 3 piso B**
**E-28006 Madrid(ES)**

(54) **Multi-conference system.**

(57) The system of this invention, which purpose is to allow the simultaneous realization of a number of conferences with a minimum presence of transmitted signals into the corresponding reception channel, is constituted by a functional association of a series of digital hybrids (1) that serve as a bond between a switching matrix (2) with the remote control units (3). The controlling function is carried out by a micro-controller unit (4) through a control bus (13) and through an interface (5) for hybrids (1), a switching matrix and the remote control units (3).

FIG.-1

EP 0 509 182 A1

## PURPOSE OF THE INVENTION

This invention is referred to a multi-conference system based on digital hybrids that allows the simultaneous realization of a number of conferences and, at the same time, the cancellation of the echo between the transmission and the reception lines.

## BACKGROUND OF THE INVENTION

The most advanced signal digital treatment techniques allow the building of digital telephone hydrids to reduce to the maximum the signal filtrated through a conventional analogic hybrid.

These techniques analyze each telephone line allowing the best adaption of the system to the line charactersitics. The process is based on an adaptive filter, in which the signal proceeding from an analogic hybrid is constantly compared to adjust the filter characteristics and to eliminate the presence of any transmitted signal in the reception channel.

The advantage of this process is that it is done automatically, in such a way that the filter parameters are continuously adjusted according to the line impedance variation, adjusting its transference function to reach the maximum adaptation.

## DESCRIPTION OF THE INVENTION

The multi-conference system proposed by this invention is based on the use of a series of digital hybrids through which the telephone signals are transmitted proceeding from a matrix that connects the outside of the system with the general transmission and reception lines, and with a determined number of remote control units, with the collaboration of a micro-controller unit.

Although this system is limited by the number of hybrids or by the number of remote control units, it has the great advantage of allowing an illimited connection with the outside without any kind of interference from the system, allowing also all kind of communication between the lines inside the system.

## DESCRIPTION OF THE DRAWINGS

To complete this description, and in order to help to a better understanding of the characteristics of the invention, attached, and as an integrant part of it, there is a drawing which figure represents a block diagram of the multi-conference system proposed by the invention and based on the use of digital hybrids.

## PREFERENT EMBODIMENT OF THE INVENTION

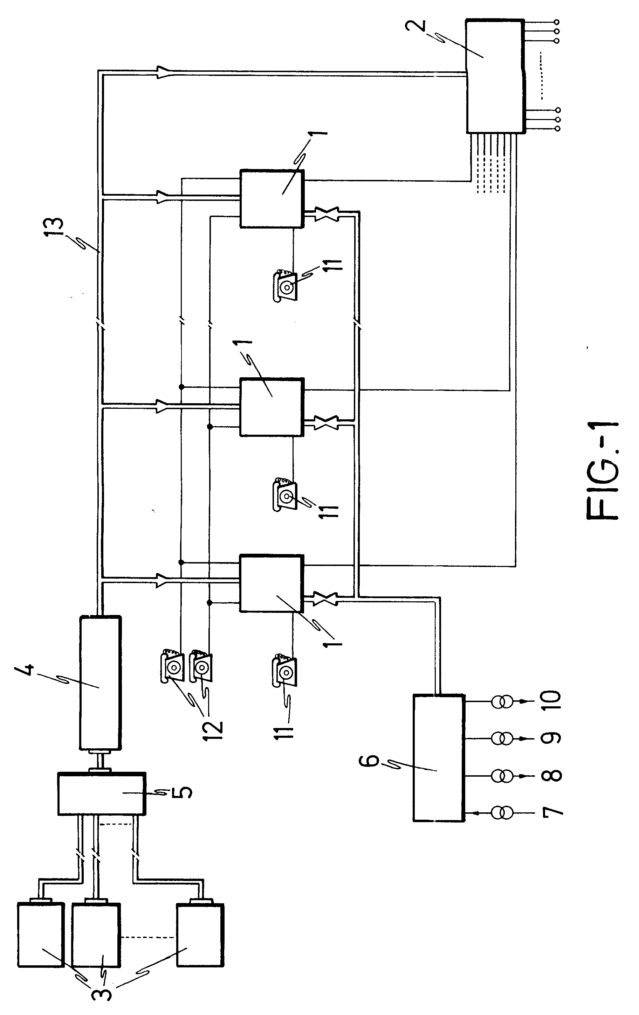

The figure shows that the multi-conference system being disclosed, is constituted by a series of digital hybrids (1), up to a maximum number of eight, that serves as a bond between the switching matrix (2), in the case of the 40 x 8 preferent realization, and an indefinite number of remote control units (3), all being monitored by a micro-controller unit (4) bonded to the remote control units (3) through an interface (5) of the model RS 232 or RS 422, having being prepared the existance of a bus (6) to which it is bonded a general transmiting line (7), a general reception line (8), the monitorization of one or more lines (9) and a registering line (10).

A telephone line (11) is associated to each hydrid (1), and two telephone terminals (12) are associated to all them.

The communication between the micro-controller unit (4), the digital hybrids (1) and the switching matrix (2) is done through the monitoring bus (13). The communication bus (6) to be connected to lines (7), (8), (9) and (10) is analogic.

The system is absolutely versatile, allowing the association from one to eight units with all kind of communication between them, without any interference between the trasmission and reception signals.

It is not considered necessary to make wider this description to allow to any skill in the art to understand the scope of the invention and the advantages derived from it.

A preferent embodiment of the invention has been disclosed, but of course the same is subjected to a number of modifications and changes in the materials, shape, size and arrangement of the elements, whenever this do not alterate the scope of the invention.

The terms used for this description must be taken in a wide and non limitative sense.

## Claims

1. A multi-conference system, concieved to allow a number of simultaneous conferences, with a minimum presence of transmitted singals into the reception channel, characterized in that it is constituted by the functional association of a series of digital hybrids (1), bonded to a switching matrix (2), with an indefinite number of remote control units (3), all monitored by a micro-controller unit (4), bonded to remote control units (3) through an interface (5) and to the digital hybrids (1) and the swithching matrix (2) through a monitoring bus (13), having being prepared the existance of an analogic bus (6) to access to the general transmission lines (7), general reception lines (8), one-line monitoring (9) and a registry (10).

2. A multi-conference system claimed as claim 1, characterized in that there is a telephone terminal associated to each digital hybrid, having being prepared the existance of two or more common lines connected to all them.

FIG-1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | AT & T TECHNOLOGY.<br>vol. 3, no. 1, 1988, SHORT HILLS, NEW JERSEY US<br>pages 22 - 31;<br>E.D.HASZTO ET AL: 'ALLIANCE Teleconferencing Services Boost Business Efficiency'<br>* page 26, left column, line 25 - line 27; figure 4 *<br>* page 28, left column, line 17 - line 49 *<br>--- | 1 | H04M3/56 |
| X | TELESIS.<br>no. 1, 1987, OTTAWA CA<br>pages 23 - 31;<br>J.ELLIS ET AL: 'Conference bridge State of the art in teleconferencing'<br>* page 29 *<br>--- | 1 | |
| X | REVIEW OF THE ELECTRICAL COMMUNICATION LABORATORIES.<br>vol. 36, no. 2, March 1988, TOKYO JP<br>pages 217 - 223;<br>H.OIKAWA ET AL: 'Audio Teleconferencing Set with Multipath Echo Canceller'<br>* page 220, left column, line 5 - line 18; figure 4 *<br>--- | 1 | |
| X | GB-A-2 220 546 (NEC CORPORAT.)<br>* figure 1 *<br>--- | 1 | |
| X | DE-A-3 306 995 (SIEMENS)<br>* page 5, line 29 - page 6, line 32 *<br>* abstract *<br>--- | 1 | |
| X | PATENT ABSTRACTS OF JAPAN<br>vol. 9, no. 165 (E-327)(1888) 10 July 1985<br>& JP-A-60 038 962 ( NIPPON DENKI K.K. ) 28 February 1985<br>* abstract *<br>----- | 1 | |

TECHNICAL FIELDS SEARCHED (Int. Cl.5 )

H04M

The present search report has been drawn up for all claims

| Place of search | Date of completion of the search | Examiner |
|---|---|---|
| THE HAGUE | 23 MARCH 1992 | VANDEVENNE M.J. |